(19) Europäisches Patentamt / European Patent Office / Office européen des brevets

(11) **EP 1 925 139 B1**

(12) **FASCICULE DE BREVET EUROPEEN**

(45) Date de publication et mention
de la délivrance du brevet:
**31.08.2016 Bulletin 2016/35**

(21) Numéro de dépôt: **06808125.6**

(22) Date de dépôt: **13.09.2006**

(51) Int Cl.:
*H04L 27/26* (2006.01)   *H03J 1/00* (2006.01)

(86) Numéro de dépôt international:
**PCT/FR2006/002099**

(87) Numéro de publication internationale:
**WO 2007/031646 (22.03.2007 Gazette 2007/12)**

(54) **CARACTÉRISATION DE SPECTRE POUR ÉQUIPEMENTS DE COMMUNICATION**

CHARAKTERISIERUNG VON RADIOSPEKTREN FÜR KOMMUNIKATIONSVORRICHTUNGEN

SPECTRUM CHARACTERIZATION FOR COMMUNICATION EQUIPMENT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **13.09.2005 FR 0509344**

(43) Date de publication de la demande:
**28.05.2008 Bulletin 2008/22**

(73) Titulaire: **Orange**
**75015 Paris (FR)**

(72) Inventeurs:
• **MARX, François**
**F-38240 Meylan (FR)**
• **CALLONEC, Denis**
**38570 Tencin (FR)**

(74) Mandataire: **Cabinet Plasseraud**
**66, rue de la Chaussée d'Antin**
**75440 Paris Cedex 09 (FR)**

(56) Documents cités:
**EP-A- 1 139 564    WO-A-00/65789
WO-A-96/10300    US-A1- 2004 258 014**

• **VALLET R ET AL: "FRACTION SPACED MULTI-CARRIER MODULATION" WIRELESS PERSONAL COMMUNICATIONS, SPRINGER, DORDRECHT, NL, vol. 2, no. 1/2, janvier 1995 (1995-01), pages 97-103, XP000589614 ISSN: 0929-6212**
• **WONJONG RHEE ET AL: "Performance comparison of OFDM and multitone with polyphase filter bank for wireless communications" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, vol. 2, 18 mai 1998 (1998-05-18), pages 768-772, XP010288090 ISBN: 0-7803-4320-4**

**Description**

La présente invention concerne la caractérisation fine de spectre, notamment pour des équipements de communication numérique, en contexte radioélectrique ou filaire.

L'invention trouve une application avantageuse, mais non limitative, à la communication en modulation OFDM, notamment à la communication cognitive et agile en fréquences.

Le terme "*communication cognitive"* découle du vocable anglo-saxon *"cognitive radio"* et désigne une communication intelligente dans laquelle les équipements sont capables de changer de fréquences en dynamique et sur une large plage de fréquences (par exemple quelques GHz, d'où aussi le terme "*agile en fréquences"*).

Par ailleurs, il est rappelé que la modulation OFDM (pour *"Orthogonal Frequency Division Multiplexing"*) permet de répartir un train binaire de haut débit en une multitude de trains (ou canaux), modulés à bas débits. Chacun de ces sous-canaux est modulé par une fréquence différente, l'espacement entre fréquences restant constant. Ces fréquences constituent une base orthogonale dans laquelle le spectre du signal OFDM présente une occupation optimale de la bande allouée. Ainsi, la modulation OFDM assure une répartition d'un débit important sur une série de sous-porteuses orthogonales et modulées à bas débits. Ces sous-porteuses se présentent généralement comme d'étroites bandes de fréquences.

Le document EP 1 139 564 divulgue un récepteur qui détecte le statut de détection d'ondes radio d'autres stations sans détériorer le statut de réception d'une station en cours de réception.

Un des buts de la présente invention est préférentiellement de permettre à des équipements de communication de :

- mesurer et caractériser l'occupation spectrale sur une gamme de fréquences dans laquelle ces équipements sont eux-mêmes susceptibles d'opérer, par exemple en contexte OFDM, et
- décider, en fonction du besoin de communication et de l'analyse du spectre, de la bande dans laquelle travailler.

L'invention propose alors une caractérisation fine du spectre des fréquences notamment pour des équipements de communication cognitive et agile en fréquences. Elle met en oeuvre à cet effet un balayage du spectre (ou "*scanning*" en vocable anglo-saxon). Toutefois, la présente demande entend par le terme *"balayage"* le fait de parcourir le spectre, de manière générale, que ce soit pour rechercher une bande libre dans le spectre, ou encore pour détecter des interférents, ou autre.

Il a été proposé, notamment dans des documents tels que WO-96/10300, un balayage de spectre associé à un système de décision.

Le balayage numérique du spectre se fait généralement à l'aide d'une transformée de Fourier, avec, en particulier, une capture des échantillons numériques dans une bande de fréquences et une transformée de Fourier rapide (ou "*FFT*" ci-après). Le résultat de la FFT correspond au spectre du signal dans la bande considérée.

Toutefois, l'analyse par FFT simple ne représente pas fidèlement les spectres présents et ne permet donc pas une identification et une caractérisation fiables des signaux correspondants. L'une des raisons possibles de cet inconvénient serait liée à la fenêtre rectangulaire de l'analyse temporelle. Une sinusoïde pure, dont la fréquence ne correspond pas exactement à l'une des fréquences porteuses de la FFT de balayage, rapporte de l'énergie sur un grand nombre de porteuses et ce dans un rapport avec l'énergie de la porteuse la plus forte qui n'est ni maîtrisable, ni prédictible d'un équipement à un autre.

Par ailleurs, un analyseur de spectre classique est extrêmement coûteux, notamment pour les raisons suivantes :

- il doit couvrir une très grande gamme de fréquences,
- il doit couvrir des résolutions variables,
- il a finalement pour fonction de présenter le spectre mesuré suivant un grand nombre de paramètres.

La présente invention vient améliorer la situation.

Elle propose à cet effet, pour réaliser le balayage de spectre, de faire précéder le calcul de transformée de Fourier rapide par un filtrage de mise en forme multiporteuses (filtrage de mise en forme effectué sur chacune des porteuses) afin de décider, en fonction du résultat obtenu, si un signal est présent sur la bande considérée ou non et, le cas échéant, de le caractériser finement (nature du signal, gabarit, niveau, ou autre).

En termes plus généraux, l'invention vise d'abord un procédé de balayage de spectre à la réception d'un signal numérique, ce procédé comportant un calcul par transformée de Fourier. Au sens de l'invention, ce calcul est précédé d'un filtrage de mise en forme multiporteuses.

Avantageusement, un mode de réalisation du filtre de mise en forme multiporteuses est un filtre polyphase.

Ainsi, selon l'un des avantages que présente l'invention, il est possible de caractériser finement les composantes d'un spectre ambiant, et ce de manière reproductible et déterministe dans le temps, pour un même équipement ou encore pour plusieurs instanciations d'équipements.

Selon un autre avantage que présente l'invention, il est possible de tirer profit d'une chaîne de réception multiporteuses à banc de filtres, déjà présente sur les équipements de communication, pour pouvoir effectuer à la fois le balayage du spectre au sens de l'invention et les étapes classiques de réception d'un signal numérique, notamment la démodulation du signal reçu. Néanmoins, cette mesure, bien qu'avantageuse, n'est aucunement obligatoire.

L'invention vise donc aussi une chaîne de balayage de spectre au sens de l'invention, ainsi qu'un équipement communicant comportant une telle chaîne, laquelle comprend un banc de filtrage de mise en forme multiporteuses en amont d'un module de calcul de transformée de Fourier, et préférentiellement des modules d'identification, de décision sur la présence ou non d'un signal dans le spectre considéré et, le cas échéant, de sa caractérisation. La description détaillée ci-après donne un exemple de réalisation d'une telle détection de signal, ce signal étant pré-répertorié (sa signature spectrale étant connue dans l'exemple qui est décrit).

L'invention vise aussi un équipement communicant (par exemple une station de base ou un terminal) comportant la chaîne de balayage de spectre au sens de l'invention, ainsi qu'un système de communication, avantageusement en contexte de communication cognitive et agile en fréquences, mettant en jeu au moins une station de base et/ou au moins un terminal, en tant qu'équipement communicant au sens de l'invention.

L'invention peut avantageusement utiliser des signatures de signaux préétablies, des règles de caractérisation et de détection de ces signaux, et, en particulier, un programme informatique pour la mise en oeuvre de l'invention. La présente invention vise aussi un tel programme informatique, ainsi qu'un composant programmable (par exemple un circuit intégré, un module DSP ou autre) comportant une mémoire stockant un tel programme. Un tel composant ou circuit intégré peut comporter la chaîne de balayage précitée seule, ou encore la chaîne de balayage en combinaison avec tout ou partie des moyens de l'équipement communicant.

D'autres caractéristiques et avantages de l'invention apparaîtront à l'examen de la description détaillée ci-après, et des dessins annexés sur lesquels :

- la figure 1 illustre un traitement au sens de l'invention, avec balayage de spectre par calcul de FFT précédé d'un filtrage,

- la figure 2 illustre schématiquement la détection d'un signal de signature connue qui, avantageusement, peut succéder le traitement de la figure 1,

- la figure 3 représente un graphe de la fonction IOTA, en tant que fonction de mise en forme du banc de filtrage polyphase intervenant avant le calcul de FFT, dans un exemple de réalisation avantageux,

- les figures 4A à 4D illustrent une comparaison entre l'estimation spectrale au sens de l'invention, en rajoutant un filtrage par la fonction IOTA avant la FFT (traits pleins), et une estimation spectrale classique avec une simple FFT (traits pointillés),

- la figure 5 illustre un premier mode de réalisation possible d'un équipement de communication mettant en oeuvre le traitement au sens de l'invention, dans lequel la chaîne de démodulation d'un signal utile et la chaîne de balayage sont séparées,

- la figure 6 illustre un second mode de réalisation possible d'un équipement de communication mettant en oeuvre le traitement au sens de l'invention, dans lequel, de façon avantageuse, la chaîne de démodulation du signal utile et la chaîne de balayage sont communes mais n'opèrent pas en même temps,

- la figure 7 illustre une application du procédé au sens de l'invention à l'allocation dynamique de spectre dans un contexte de radiocommunication de contenu.

Dans la description détaillée ci-après, le contexte de l'invention, donné à titre d'exemple, est le balayage (ou *"scanning"*) par démodulation OFDM filtré par une mise en forme multiporteuses polyphase de IOTA. Le principe s'applique également pour toute autre mise en forme multiporteuses (dont une mise en forme multiporteuses polyphase de Nyquist).

Ce traitement s'applique à un signal numérique reçu. Ce signal peut donc être reçu directement sous forme numérique (par exemple en diffusion ou en communication numérique, tel qu'un signal de télévision numérique). En variante, il peut s'agir aussi d'un signal qui a été reçu sous forme analogique, puis numérisé.

La description détaillée ci-après utilise les notations suivantes :

- L est la longueur de troncature de la fonction de mise en forme d'un filtre polyphase utilisé pour le balayage de spectre (par exemple une fonction de type IOTA, Nyquist, ou autre) ;
- M est le nombre d'échantillons temporels sur la durée équivalente à la durée d'un symbole en modulation OFDM/IOTA ;
- N est le nombre de sous-porteuses prévu dans le balayage (étant entendu qu'à partir de la bande totale balayée, il est possible de fixer la résolution de l'analyse) ;
- $g_k$ sont les échantillons temporels de la fonction de mise en forme ;
- $r_k$ sont les échantillons temporels du signal reçu dans la bande d'analyse ;
- $R_k$ sont les échantillons temporels filtrés de ce signal ; et
- $a_m$ sont les coefficients dé ce signal dans le domaine fréquentiel.

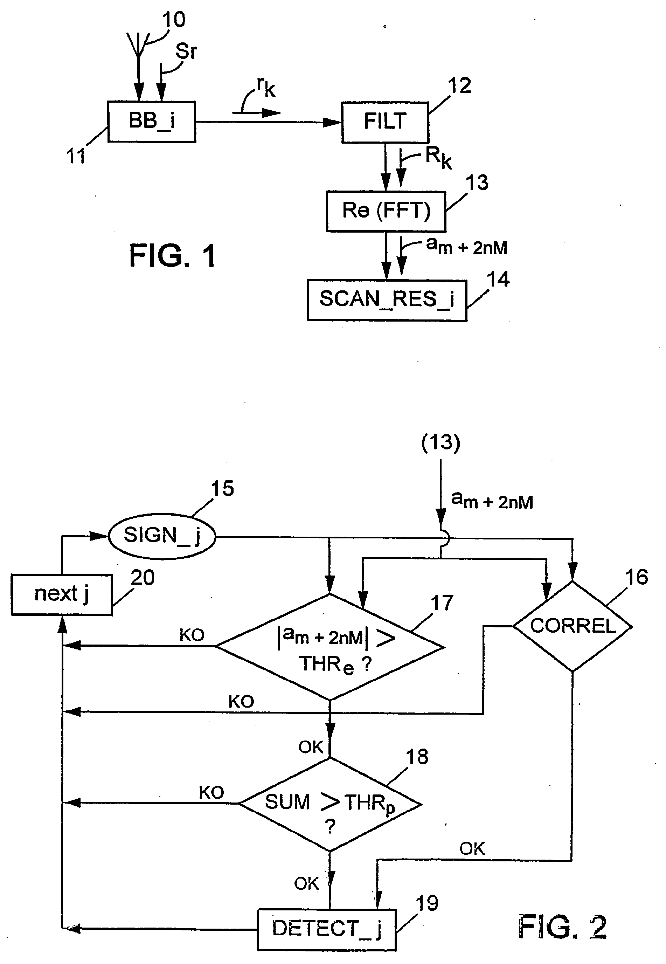

En référence à la figure 1, un signal radiofréquence $S_r$ est capté par une antenne 10. Une partie du signal, typiquement une bande de fréquences assez large (par exemple quelques mégahertz), est redescendue en bande de base de façon classique par un module syntoniseur (ou *"tuner"*) 11, ce qui revient à *"sélectionner"* une bande précise i du signal $S_r$. La sortie du module 11 délivre une suite d'échantillons $r_k$ (M échantillons d'un symbole à chaque fois) qui sont appliqués ensuite au filtre de mise en forme polyphase 12, selon la formule générale suivante :

$$R_{k+2nM} = \sum_{q=0}^{L-1} r_{k+nM+2qM} g_{k+2qM} \quad k \in \{0..M-1\}$$

$$R_{k+2nM+M} = \sum_{q=0}^{L-1} r_{k+nM+2qM} g_{k+2qM} \quad k \in \{0..M-1\}$$

Les échantillons ainsi filtrés $R_k$ sont ensuite appliqués à un module de calcul 13 qui évalue leur transformée de Fourier selon la formule :

$$a_{m+2nM} = \sum_{k=0}^{2M-1} R_{k+2nM} e^{-i2\pi\frac{km}{2M}} \quad m \in \{0..2M-1\}$$

Un module de décision 14 se base sur les coefficients $a_{m+2nM}$ ainsi évalués pour obtenir une estimation du spectre du signal $S_r$. Cette information est déjà utile en soi.

Pour détecter ensuite un signal j dont la signature spectrale SIGN-j est préalablement connue (issue par exemple d'un module mémoire), il peut être prévu avantageusement un traitement tel qu'illustré à titre d'exemple sur la figure 2. En particulier, il peut être prévu d'appliquer l'un des traitements suivants ou une combinaison de ces traitements :

- corréler le spectre estimé (c'est-à-dire les coefficients $a_{m+2nM}$) avec la signature spectrale du signal recherché, avec une fonction de corrélation portant sur l'ensemble de la signature ou sur une suite de sous-parties de cette signature et passer un critère de test global 16 (ou une suite de tests, respectivement),
- rechercher une fréquence pilote connue, ce qui revient à observer si l'énergie de l'une des sous-porteuses franchit un certain seuil $THR_e$ et qui s'exprime par :

  $|a_{m+2nM}| > THR_e$, m+2nM étant fixé à la fréquence pilote connue, dans le module de test 17 de la figure 2,

- intégrer la densité spectrale de puissance sur une bande donnée (en calculant par exemple la somme SUM des coefficients $|a_{m+2nm}|$ ou leur carré $|a_{m+2nM}|^2$) et rechercher si la densité spectrale de puissance franchit un seuil $THR_p$ (module de test 18 de la figure 2).

Si le test ou la série des tests n'est pas satisfait (flèches ko en sortie des tests), le traitement peut être réitéré pour une signature de signal suivante (modules 20 et 15).

En revanche, si le ou les tests s'avèrent positifs (flèches ok en sortie des tests), le module de décision 19 signale la détection d'un signal j de signature spectrale SIGN-j. Pour améliorer le rapport signal sur bruit, le calcul peut être réitéré pour différents symboles.

Ainsi, en termes plus généraux, le filtrage et l'estimation de la transformée de Fourier au sens de l'invention sont avantageusement suivis d'une identification d'un signal pré-répertorié.

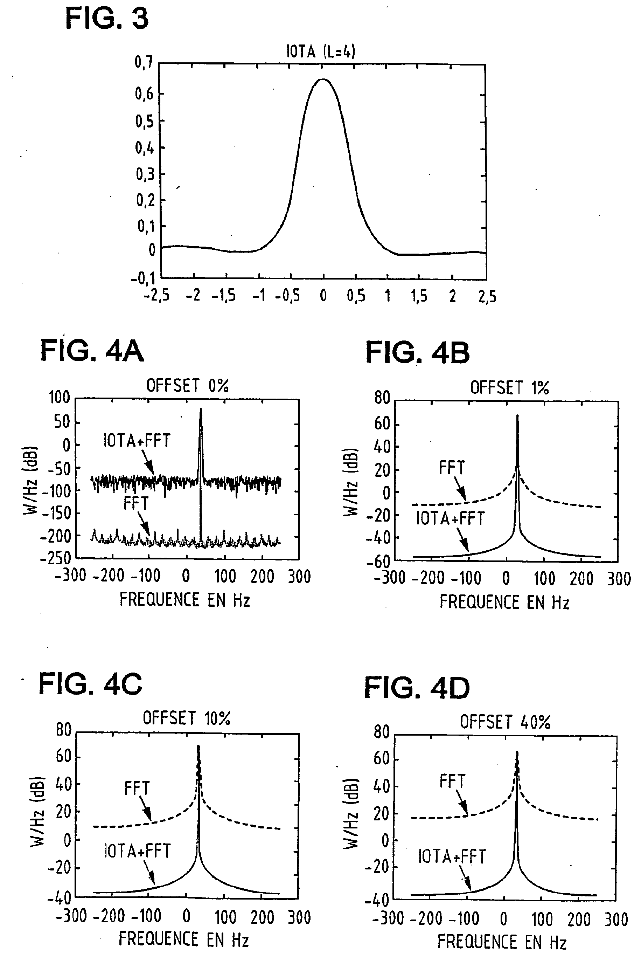

Les performances de la chaîne de balayage de spectre, au sens de l'invention, sont décrites dans un exemple ci-après, dans lequel la fonction de mise en forme du filtrage polyphase intervenant avant le calcul de FFT est la fonction IOTA (pour *"Isotropic Orthogonal Transform Algorithm"*) bien connue en technique de modulation OFDM et dont un graphique est représenté sur la figure 3.

Dans l'exemple décrit, les conditions de test sont les suivantes :

- M=256,
- L=4,
- r est une sinusoïde pure (présentant un décalage de fréquence (ou *"offset"* ci-après) de 0; 1; 10; 40 % par rapport à l'une quelconque des porteuses FFT du traitement de réception, relativement à l'écart interporteuses),
- g est la fonction IOTA (figure 3).

Les quatre figures 4A à 4D comparent alors :

- une estimation spectrale en rajoutant un filtrage par la fonction IOTA avant le calcul de FFT, au sens de l'invention, et
- une estimation spectrale classique avec une simple FFT, et ce, respectivement pour des offsets de fréquence de la sinusoïde pure de 0; 1; 10; 40 % par rapport aux porteuses FFT du traitement de balayage.

Les spectres du signal avec une FFT classique sont représentés en traits pointillés et les spectres du signal avec un traitement IOTA+FFT sont représentés en traits pleins.

Ces quatre figures 4A à 4D illustrent bien la supériorité de l'analyse fine du spectre par banc de filtrage par rapport à l'approche FFT classique. En particulier, la dispersion de la fréquence sur plusieurs sous-porteuses dans le cas de FFT simple apparaît clairement sur les figures 4B, 4C, 4D, alors que pour le traitement IOTA+FFT au sens de l'invention l'énergie est concentrée sur une seule sous-porteuse.

La figure 4A illustre un cas particulier où la sinusoïde pure est parfaitement en phase avec l'une des porteuses issues de ta FFT.

En définissant un facteur de localisation L selon la formule :

$$L = \frac{|a_{p+2}|^2}{|a_p|^2}, \ avec \ p = \arg\max_{m}|a_m|$$

le tableau ci-après, comparant les performances, en terme de localisation fréquentielle, du traitement au sens de l'invention (IOTA+FFT) et du traitement classique (FFT simple), illustre la supériorité du traitement au sens de l'invention.

|  | Offset=0% | Offset=1 % | Offset=10% | Offset=40% |
|---|---|---|---|---|
| FFT simple | L=-∞ | L=-46dB | L=-25dB | L=-12dB |
| IOTA+FFT | L=-34dB | L=-34dB | L=-35dB | L=-53dB |

Bien entendu, plus le facteur L est faible et plus le spectre est caractérisé finement.

Les simulations montrent que le balayage IOTA+FFT reproduit plus fidèlement la sinusoïde pure et qu'il est moins sensible aux offsets de fréquence entre la sinusoïde et les porteuses FFT du traitement de balayage. Cette observation (réalisée sur une raie pure ici) peut être généralisée à un signal quelconque. Ainsi, on comprendra que la mise en oeuvre de l'invention permet de caractériser plus fidèlement et de façon plus déterministe les signaux en présence.

Le document :

*"Fraction Space Multi-Carrier Modulation"*, R. Vallet et K.H. Taieb, Wireless Personal Communications 2, 97-103, 1995,

décrit une méthode théorique consistant à opérer un filtrage de mise en forme multiporteuses avant un calcul par transformée de Fourier.

Cependant, la présente invention utilise cette méthode, certes connue, mais pour effectuer un balayage du spectre d'un signal numérique reçu, ce qui n'est aucunement divulgué dans le document ci-avant. L'avantage surprenant de cette utilisation nouvelle est d'offrir une reproduction fidèle, par exemple d'une sinusoïde pure comme indiqué ci-avant. Cette reproduction fidèle offre, de plus, l'avantage d'être peu sensible aux offsets de fréquence entre la sinusoïde et les porteuses FFT du traitement de balayage. Le tableau ci-avant montre bien qu'avec le balayage IOTA+FFT, le facteur de localisation L est quasiment constant (environ -35 dB, hormis pour l'offset de 40% qui correspond à une valeur de limite de fonctionnement, cette dernière ambiguïté pouvant être levée, le cas échéant, par l'application du même balayage mais décalé en fréquence d'un demi écart interporteuse). On rappelle encore qu'avec le balayage FFT habituel sans mise en forme, ce facteur L varie considérablement. Ainsi, le balayage IOTA+FFT permet une stabilité dans le gabarit mesuré. Grâce à cette stabilité, on peut définir, comme on le verra plus loin :

- une méthodologie de mesure sur la base de ce procédé de balayage,
- des règles de détection et d'opération sur des fréquences libres, et
- introduire ces règles dans une norme.

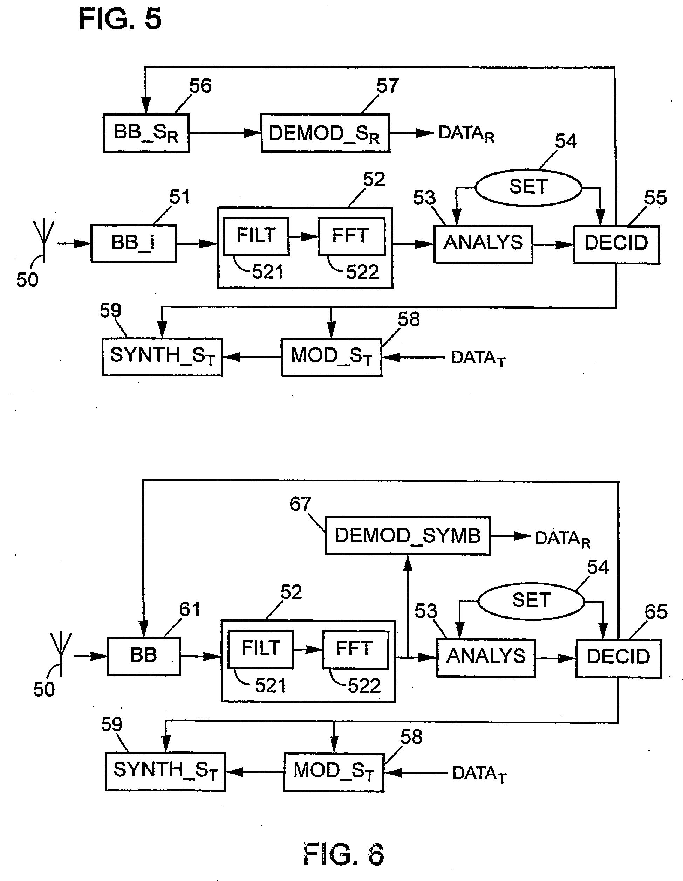

Dans, le document Vallet et al précité, aucune incitation ne pousserait l'homme du métier à utiliser la méthode connue de filtrage de mise en forme suivi d'un calcul par transformée de Fourier pour effectuer un balayage du spectre d'un signal reçu dans le but d'être moins sensible aux offsets de fréquence.
L'implémentation d'une chaîne de traitement au sens de l'invention dans un équipement de communication est décrite maintenant en référence aux figures 5 et 6.
En référence à la figure 5, dans un premier mode de réalisation, l'équipement comprend par exemple :

- un syntoniseur 51 ramenant le signal reçu en bande de base, disposé en aval d'une antenne 50 et couvrant la gamme de fréquences opérables par l'équipement,
- un banc de filtres numériques 52 composé d'une FFT 522 et, la précédant, d'un filtre polyphase 521 permettant d'isoler les fréquences (mettant en oeuvre une fonction de mise en forme ou un prototype multiporteuses IOTA ou Nyquist).

Comme présenté précédemment en référence aux figures 4A à 4D, un intérêt du filtre de mise en forme est de reproduire fidèlement le spectre reçu, les niveaux relatifs sur les porteuses FFT étant alors respectés, en s'affranchissant des contraintes d'orthogonalité de la seule opération de FFT.
Cette chaîne de traitement permet donc d'effectuer un balayage du spectre ambiant et de mesurer fidèlement les composantes spectrales. Ainsi, une raie pure à X dB au dessus du niveau du bruit mesurable dans une bande d'analyse W, ressort de cette chaîne de traitement avec X dB au-dessus du niveau des porteuses FFT intégrant le bruit avec une résolution W.
En référence à nouveau à la figure 5, la chaîne de traitement 51-52 décrite ci-avant peut être succédée d'une chaîne d'analyse et décision 53-55, comprenant :

- un module mémoire 54 (statique ou pouvant avantageusement être mis à jour), stockant :

  * un jeu de règles de caractérisation et de prises de décision,
  * un ensemble de conditions de mesures, et
  * un ensemble de *"signatures"* ou gabarits recensés,

- un module d'analyse de spectre 53 pour l'identification et la caractérisation des signaux reçus, exploitant les règles précitées de caractérisation et les mesures effectuées, et
- un module de décision ou d'aide à la décision 55, s'appuyant sur les règles précitées pour opérer dynamiquement sur une bande de fréquences en fonction des signaux détectés et caractérisés précédemment.

En poursuivant alors la description des éléments pertinents de l'équipement communicant au sens de l'invention, en référence à la figure 5, une chaîne de réception de l'équipement comporte :

- un syntoniseur 56 opérant à la fréquence du signal utile reçu, cette fréquence ayant été déterminée par le module de décision 55, et
- un démodulateur 57 du signal utile pour accéder finalement aux données reçues DATA$_R$.

L'équipement comporte en outre une chaîne d'émission. Cette chaîne inclut un modulateur 58 qui opère à la fréquence du signal utile comportant les données à émettre DATA$_T$. Cette fréquence est avantageusement déterminée par le module de décision 55. Le modulateur 58 est suivi d'un module de synthèse 59 du signal utile, avant l'émission de ce dernier.
Dans un second mode de réalisation, la chaîne de balayage de spectre et la chaîne de démodulation à la réception du signal utile comportent avantageusement une majorité d'éléments en commun. En effet, dans ce second mode de réalisation, les fonctions de balayage et de démodulation du signal utile sont séparées dans le temps. La démodulation a lieu pendant une tranche temporelle, tandis que le balayage de spectre est effectué pendant une autre tranche temporelle.

La figure 6, sur laquelle les éléments communs avec la figure 5 portent les mêmes références, illustre ce second mode de réalisation. Avantageusement, la mise en oeuvre de ce second mode de réalisation permet l'économie du syntoniseur 56 de la chaîne de démodulation présentée sur la figure 5. Le syntoniseur 61 de la figure 6 ramène le signal reçu en bande de base et peut alors opérer communément en balayage de spectre et en réception, en particulier pour la démodulation du signal reçu. Le module de décision 65 peut avantageusement piloter ce syntoniseur 61.

Par ailleurs, si le démodulateur du signal utile opère un calcul de FFT, voire un filtrage multiporteuses précédant le calcul de FFT, alors tout ou partie de l'architecture matérielle du traitement de balayage (module 52) peut être *"mutualisée"* (c'est-à-dire partagée) avec le traitement de démodulation du signal utile. Il reste finalement, pour assurer le traitement non *"mutualisable",* un module supplémentaire 67 (figure 6) à rajouter pour ce traitement du signal utile, en aval du module de calcul de FFT 522, et assurant typiquement la démodulation des symboles complexes issus de la FFT.

Avantageusement, le traitement au sens de l'invention permet ainsi des fonctionnalités de communication cognitive et agile en fréquences, en s'appuyant sur l'implémentation décrite ci-avant dans des équipements de communication et par l'énonciation de règles de caractérisation de signaux et de décisions, notamment en commandant la fréquence appropriée du signal utile pour l'émission, déterminée par la chaîne de décision.

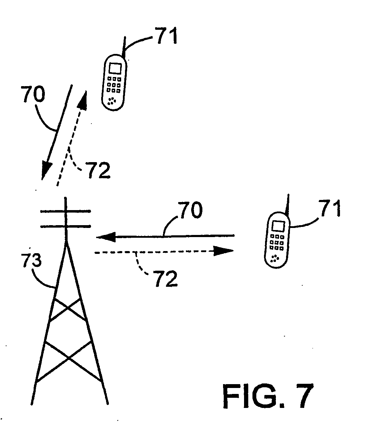

Par exemple, en référence à la figure 7, dans une application à la radiocommunication cognitive de contenu (tel que du contenu de télévision) et plus précisément à l'allocation dynamique de spectre dans un contexte de radiocommunication opportuniste typiquement selon la norme IEEE 802.22 :

- un équipement communicant de type terminal 71, à disposition d'un utilisateur, peut effectuer un balayage du spectre, au sens de la présente invention, à la recherche d'une bande libre dans le spectre des fréquences de télévision (typiquement en contexte de libéralisation de la bande TV pour la radiocommunication cognitive), et détecter ainsi les émissions de la télévision analogique et numérique,
- l'information spectrale peut être communiquée (flèches 70) à une station de base 73 qui fusionne les informations reçues de tous les terminaux, et
- la station de base 73 choisit dans le spectre TV une fréquence libre sur laquelle elle peut émettre du contenu, de sorte que la communication peut alors être lancée sur cette fréquence (flèches 72 en traits pointillés).

Une autre application pourrait être un système global de radiocommunication cognitive dans lequel les sous-porteuses pourraient couvrir une grande partie au moins du spectre (contexte dit *"d'Open Spectrum"*) et être affectées à chaque utilisateur sans gêner des utilisateurs précédents.

**Revendications**

1. Procédé de balayage de spectre à la réception d'un signal numérique, le procédé comportant un calcul par transformée de Fourier (13), **caractérisé en ce que** ledit calcul est précédé d'un filtrage de mise en forme multiporteuses.

2. Procédé selon la revendication 1, **caractérisé en ce que** le filtre de mise en forme multiporteuses est un filtre polyphase (12).

3. Procédé selon l'une des revendications 1 et 2, **caractérisé en ce qu'**il est mis en oeuvre en contexte de modulation OFDM.

4. Procédé selon l'une des revendications 1 à 3, **caractérisé en ce que** le filtrage utilise une fonction de mise en forme de type « Isotropic Orthogonal Transform Algorithm » IOTA.

5. Procédé selon l'une des revendications précédentes, **caractérisé en ce que** le filtrage et le calcul par transformée de Fourier sont suivis d'une identification d'un signal pré-répertorié (15,16,17,18,19).

6. Procédé de balayage de spectre selon l'une des revendications précédentes, appliqué à l'allocation dynamique de spectre en radiocommunication de contenu, dans lequel :

  - au moins un équipement communicant (71) effectue le balayage du spectre des fréquences pour rechercher une bande libre et communique (70), selon le balayage effectué, une information spectrale à destination d'une station de base (73), et

- en fonction des informations reçues dudit équipement communicant et d'éventuels autres équipements communicants, la station de base (73) choisit une fréquence libre du spectre, commune, pour initier (72) une communication de contenu sur ladite fréquence commune, à destination desdits équipements communicants.

**7.** Chaîne de balayage de spectre d'un signal numérique reçu, **caractérisée en ce qu'**elle comporte un banc de filtrage de mise en forme multiporteuses (521), en amont d'un module de calcul de transformée de Fourier (522).

**8.** Chaîne de balayage de spectre selon la revendication 7, **caractérisée en ce qu'**elle comporte en outre, en aval du module de calcul (522) :

- un module d'analyse et d'identification (53), à partir de règles de caractérisation prédéfinies, d'un signal pré-répertorié, et
- un module de décision (55), en aval du module d'analyse et d'identification (53), indiquant au moins une bande de fréquences d'opération d'un équipement communicant, en réception et/ou en émission.

**9.** Equipement communicant **caractérisé en ce qu'**il comporte une chaîne de balayage de spectre d'un signal numérique reçu, la chaîne comprenant un banc de filtrage de mise en forme multiporteuses (521), en amont d'un module de calcul de transformée de Fourier (522).

**10.** Equipement communicant selon la revendication 9, **caractérisé en ce qu'**il comporte, en amont du banc de filtrage (521), un module ramenant le signal reçu en bande de base (61) et opérant communément en balayage de spectre et en réception, notamment pour une démodulation du signal reçu.

**11.** Equipement communicant selon l'une des revendications 9 et 10, comportant une chaîne de réception, avec démodulation, et/ou une chaîne d'émission, avec modulation, **caractérisé en ce qu'**il comporte, en aval du module de calcul de transformée de Fourier (522), un module d'analyse et d'identification (53) et un module de décision (55; 65) indiquant au moins une bande de fréquences d'opération en démodulation et/ou en modulation.

**12.** Equipement communicant selon l'une des revendications 9 à 11, ledit équipement étant une station de base d'un système de communication.

**13.** Equipement communicant selon l'une des revendications 9 à 11, ledit équipement étant un terminal d'un système de communication.

**14.** Système de communication, en contexte de communication cognitive et agile en fréquences, **caractérisé en ce qu'**il comporte au moins un équipement communicant selon l'une des revendications 9 à 13, en tant que station de base et/ou en tant que terminal.

**15.** Produit programme informatique, exécutable à partir d'une mémoire d'un module de balayage de spectre à la réception d'un signal numérique, et comportant des instructions qui, lors de leur exécution sur un ordinateur, mettent en oeuvre les étapes du procédé selon l'une des revendications 1 à 6.

**16.** Composant programmable, **caractérisé en ce qu'**il comporte une mémoire stockant le produit programme informatique selon la revendication 15.

**Patentansprüche**

**1.** Verfahren zur Spektrumsabtastung bei Empfang eines digitalen Signals, wobei das Verfahren eine Berechnung (13) durch Fourier-Transformation umfasst, **dadurch gekennzeichnet, dass** der Berechnung eine Mehrfachträger-Aufbereitungsfilterung vorhergeht.

**2.** Verfahren nach Anspruch 1, **dadurch gekennzeichnet, dass** das Mehrfachträger-Aufbereitungsfilter ein mehrphasiges Filter (12) ist.

**3.** Verfahren nach einem der Ansprüche 1 und 2, **dadurch gekennzeichnet, dass** es im Kontext einer OFDM-Modulation ausgeführt wird.

**4.** Verfahren nach einem der Ansprüche 1 bis 3, **dadurch gekennzeichnet, dass** die Filterung eine Aufbereitungsfunktion des Typs Algorithmus einer "isotropen orthogonalen Transformation" IOTA verwendet.

**5.** Verfahren nach einem der vorhergehenden Ansprüche, **dadurch gekennzeichnet, dass** der Filterung und der Berechnung durch Fourier-Transformation eine Identifizierung eines im Voraus verzeichneten Signals (15, 16, 17, 18, 19) folgt.

**6.** Verfahren zur Spektrumsabtastung nach einem der vorhergehenden Ansprüche, das auf die dynamische Spektrumszuweisung bei der Inhaltsfunkkommunikation angewendet wird, wobei:

- wenigstens ein Kommunikationsgerät (71) die Spektrumsabtastung von Frequenzen ausführt, um ein freies Band zu suchen, und gemäß der ausgeführten Abtastung Spektralinformationen an eine Basisstation (73) kommuniziert (70) und
- die Basisstation (73) als Funktion der Informationen, die von dem Kommunikationsgerät und von eventuellen anderen Kommunikationsgeräten empfangen werden, eine gemeinsame freie Frequenz des Spektrums wählt, um eine Inhaltskommunikation auf der gemeinsamen Frequenz mit den Kommunikationsgeräten zu beginnen (72).

**7.** Kette zum Abtasten des Spektrums eines empfangenen digitalen Signals, **dadurch gekennzeichnet, dass** einem Modul (522) für die Berechnung durch Fourier-Transformation eine Bank (521) für die Mehrfachträger-Aufbereitungsfilterung vorgeschaltet ist.

**8.** Spektrumsabtastungskette nach Anspruch 7, **dadurch gekennzeichnet, dass** sie außerdem dem Berechnungsmodul (522) nachgeschaltet Folgendes umfasst:

- ein Modul (53) zum Analysieren und Identifizieren ausgehend von im Voraus definierten Charakterisierungsregeln eines im Voraus verzeichneten Signals und
- ein Entscheidungsmodul (55), das dem Analyse- und Identifizierungsmodul (53) nachgeschaltet ist und wenigstens ein Betriebsfrequenzband eines Kommunikationsgeräts, das im Empfangs- und/oder im Sendebetrieb arbeitet, angibt.

**9.** Kommunikationsgerät, **dadurch gekennzeichnet, dass** es eine Kette zum Abtasten des Spektrums eines empfangenen digitalen Signals umfasst, wobei in der Kette dem Modul (522) für die Berechnung durch Fourier-Transformation eine Bank (521) für die Mehrfachträger-Aufbereitungsfilterung vorgeschaltet ist.

**10.** Kommunikationsgerät nach Anspruch 9, **dadurch gekennzeichnet, dass** der Filterbank (521) ein Modul vorgeschaltet ist, das das empfangene Signal in ein Grundband (61) überführt und gewöhnlich zur Spektrumsabtastung und zum Empfang, insbesondere für eine Demodulation des empfangenen Signals, arbeitet.

**11.** Kommunikationsgerät nach einem der Ansprüche 9 und 10, das eine Empfangskette mit Demodulation und/oder eine Sendekette mit Modulation umfasst, **dadurch gekennzeichnet, dass** dem Modul (522) für die Berechnung durch Fourier-Transformation ein Analyse- und Identifizierungsmodul (53) und ein Entscheidungsmodul (55; 65), das wenigstens ein Betriebsfrequenzband bei der Demodulation und/oder der Modulation angibt, vorgeschaltet sind.

**12.** Kommunikationsgerät nach einem der Ansprüche 9 bis 11, wobei das Gerät eine Basisstation eines Kommunikationssystems ist.

**13.** Kommunikationsgerät nach einem der Ansprüche 9 bis 11, wobei das Gerät ein Endgerät eines Kommunikationssystems ist.

**14.** Kommunikationssystem im Kontext einer kognitiven und frequenzagilen Kommunikation, **dadurch gekennzeichnet, dass** es wenigstens ein Kommunikationsgerät nach einem der Ansprüche 9 bis 13 als Basisstation und/oder als Endgerät umfasst.

**15.** Datenverarbeitungsprogrammprodukt, das von einem Speicher eines Spektrumabtastungsmoduls bei Empfang eines digitalen Signals ausführbar ist und Befehle enthält, die dann, wenn sie auf einem Computer ausgeführt werden, die Schritte des Verfahrens nach einem der Ansprüche 1 bis 6 ausführen.

16. Programmierbare Komponente, **dadurch gekennzeichnet, dass** sie einen Speicher umfasst, der das Datenverarbeitungsprogrammprodukt nach Anspruch 15 speichert.

**Claims**

1. Method of spectral scanning upon reception of a digital signal, the method comprising a Fourier transform computation (13), **characterized in that** said computation is preceded by multicarrier shaping filtering.

2. Method according to Claim 1, **characterized in that** the multicarrier shaping filter is a polyphase filter (12).

3. Method according to either of Claims 1 and 2, **characterized in that** it is implemented in an OFDM modulation context.

4. Method according to one of Claims 1 to 3, **characterized in that** the filtering uses an Isotropic Orthogonal Transform Algorithm (IOTA) type of shaping function.

5. Method according to one of the preceding claims, **characterized in that** the filtering and the Fourier transform computation are followed by identification of a pre-specified signal (15, 16, 17, 18, 19).

6. Method of spectral scanning according to one of the preceding claims, applied to dynamic spectrum allocation in radiocommunication of content, in which:

   - at least one piece of communicating equipment (71) performs the spectral scan of frequencies for searching for a free band and communicates (70), according to the performed scan, a spectral signal to a base station (73), and
   - according to the signals received from said communicating equipment and other possible communicating equipment, the base station (73) chooses a common, free frequency of the spectrum, for initiating (72) a communication of content on said common frequency, to said communicating equipment.

7. Chain for spectral scanning of a received digital signal, **characterized in that** it comprises a multicarrier shaping filter bank (521), upstream from a Fourier transform computation module (522).

8. Chain for spectral scanning according to Claim 7, **characterized in that** it further comprises, downstream from the computation module (522):

   - a module for analysis and identification (53) of a pre-specified signal, based on predefined characterization rules, and
   - a decision module (55), downstream from the analysis and identification module (53), indicating at least one operating frequency band of a piece of communicating equipment, in reception and/or in transmission.

9. Piece of communicating equipment **characterized in that** it comprises a chain for spectral scanning of a received digital signal, the chain including a multicarrier shaping filter bank (521), upstream from a Fourier transform computation module (522).

10. Piece of communicating equipment according to Claim 9, **characterized in that** it comprises, upstream from the filter bank (521), a module bringing the received signal into baseband (61) and operating both in spectral scanning and in reception, in particular for demodulating the received signal.

11. Piece of communicating equipment according to either of Claims 9 and 10, comprising a reception chain, with demodulation, and/or a transmission chain, with modulation, **characterized in that** it comprises, downstream from the Fourier transform computation module (522), an analysis and identification module (53) and a decision module (55; 65) indicating at least one operating frequency band in demodulation and/or in modulation.

12. Piece of communicating equipment according to one of Claims 9 to 11, said piece of equipment being a base station of a communication system.

13. Piece of communicating equipment according to one of Claims 9 to 11, a terminal of a communication system.

14. Communication system, in a cognitive and frequency-agile communication context, **characterized in that** it comprises at least one piece of communicating equipment according to one of Claims 9 to 13, as a base station and/or as a terminal.

15. Computer program product, executable from a memory of a spectral scanning module upon reception of a digital signal, and comprising instructions which, during the execution thereof on a computer, implement the steps of the method according to one of Claims 1 to 6.

16. Programmable component, **characterized in that** it comprises a memory storing the computer program product according to Claim 15.

FIG. 1

FIG. 2

## FIG. 3

IOTA (L=4)

## FIG. 4A

OFFSET 0%

W/Hz (dB)

IOTA+FFT

FFT

FREQUENCE EN Hz

## FIG. 4B

OFFSET 1%

W/Hz (dB)

FFT

IOTA+FFT

FREQUENCE EN Hz

## FIG. 4C

OFFSET 10%

W/Hz (dB)

FFT

IOTA+FFT

FREQUENCE EN Hz

## FIG. 4D

OFFSET 40%

W/Hz (dB)

FFT

IOTA+FFT

FREQUENCE EN Hz

## FIG. 5

## FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* EP 1139564 A

* WO 9610300 A

**Littérature non-brevet citée dans la description**

* **R. VALLET ; K.H. TAIEB.** Fraction Space Multi-Carrier Modulation. *Wireless Personal Communications,* 1995, vol. 2, 97-103